# EUROPEAN PATENT APPLICATION

(11) **EP 4 360 954 A1**
(43) Date of publication of application: **01.05.2024**
(21) Application number: 22891734.0
(22) Date of filing: 14.10.2022
(51) Int. Cl.: B60Q 1/14, F21S 41/60, F21S 41/36, F21S 41/20, F21W 107/10

(54) **VEHICLE LAMP MODULE GROUP, VEHICLE LAMP, AND VEHICLE**

(30) Priority: 12.11.2021 CN 202111339612
(71) Applicant: Hasco Vision Technology Co., Ltd., Jiading District Shanghai 201821 (CN)
(72) Inventor: YANG, Tao, Shanghai 201821 (CN); ZHANG, Jie, Shanghai 201821 (CN); ZHOU, Hao, Shanghai 201821 (CN); YAN, Shilei, Shanghai 201821 (CN); CHEN, Jiayuan, Shanghai 201821 (CN); SANG, Wenhui, Shanghai 201821 (CN); DONG, Shikun, Shanghai 201821 (CN); ZHU, He, Shanghai 201821 (CN)
(74) Representative: Loyer & Abello
(86) International application number: PCT/CN2022/125336
(87) International publication number: WO 2023/082937

(57) **Abstract**

A vehicle lamp module group (100), a vehicle lamp (12), and a vehicle (1). The vehicle lamp module group (100) comprises: a plurality of low-beam modules (101) and a plurality of high-beam modules (102), wherein the low-beam modules (101) and the high-beam modules (102) are arranged in a preset manner; and projected light rays of at least two low-beam modules (101) can jointly form a low-beam light shape, and projected light rays of at least two high-beam modules (102) can jointly form a high-beam light shape. Low-beam modules (101) and high-beam modules (102) in a vehicle lamp module group (100) may be arranged according to a certain rule or arranged irregularly, such that projected light rays of at least two low-beam modules (101) can jointly form a low-beam light shape, and projected light rays of at least two high-beam modules (102) can jointly form a high-beam light shape; a user may select a corresponding number of low-beam modules (101) and a corresponding number of high-beam modules (102) to realize high-beam and low-beam illumination; in addition, according to personal preferences, the user may select to present different lighting forms of the low-beam modules (101), the high-beam modules (102) and signal lamp modules (103), such that the user's own vehicle lamp (12) presents different appearance styles.

## Description

### CROSS-REFERENCE TO RELATED APPLICATION

This application claims priority to Chinese Patent Application No. 202111339612.X, filed with the China National Intellectual Property Administration on November 12, 2021 and entitled "VEHICLE LAMP MODULE GROUP, VEHICLE LAMP, AND VEHICLE", which is incorporated herein by reference in its entirety.

### TECHNICAL FIELD

The present disclosure relates to the field of vehicle lighting technology, and particularly, to a vehicle lamp module group, a vehicle lamp, and a vehicle.

### BACKGROUND

With the rapid development of modem technology, the lighting effect of a vehicle lamp is more diversified and more beautiful, which prompts a user to have a higher requirement for the lighting effect of the vehicle lamp. For example, the users expect that their vehicle lamp can have a lighting effect different from that of other users without affecting the normal use of the vehicle lamp, thereby realizing personalized customization. The existing vehicle lamp has a relatively simple lighting effect, and the aesthetics needs to be improved.

### SUMMARY

Embodiments of the present disclosure aim to provide a vehicle lamp module group, a vehicle lamp and a vehicle, such that a user can select different lighting forms according to the preference to make the vehicle lamp present different appearances.

Embodiments of the present disclosure are implemented as follows.

According to a first aspect, the present disclosure provides a vehicle lamp module group. The vehicle lamp module group includes: a plurality of low-beam modules; and a plurality of high-beam modules, the low-beam modules and the high-beam modules being arranged in a preset manner, where projected light of at least two low-beam modules can jointly form a low-beam light shape, and projected light of at least two high-beam modules can jointly form a high-beam light shape.

In one embodiment, the vehicle lamp module group further includes: a plurality of signal lamp modules, where the signal lamp modules, the low-beam modules and the high-beam modules are arranged in a preset manner.

In one embodiment, the vehicle lamp module group includes a low-beam unit and a high-beam unit, the low-beam unit includes at least one low-beam module and a housing accommodating the low-beam module, the high-beam unit includes at least one high-beam module and a housing accommodating the high-beam module, and the low-beam unit and the high-beam unit are arranged in a preset manner.

In one embodiment, there are a plurality of the low-beam units, the low-beam units include a low-beam unit having one low-beam module and a low-beam light unit having two interconnected low-beam modules, and the high-beam unit includes three interconnected high-beam modules.

In one embodiment, there are a plurality of the low-beam units and a plurality of the high-beam units, and the plurality of the low-beam units and the plurality of the high-beam units are arranged in a matrix, where each column of units constitute a column of vehicle lamp units, or each row of units constitute a row of vehicle lamp units.

In one embodiment, there are two rows of the vehicle lamp units, where a first row of the vehicle lamp units include two low-beam units having one low-beam module, two low-beam units having two interconnected low-beam modules and one high-beam unit having three interconnected high-beam modules, and a second row of the vehicle lamp units include two low-beam units having one low-beam module, one low-beam unit having two interconnected low-beam modules and one high-beam unit having three interconnected high-beam modules.

In one embodiment, a plurality of the low-beam modules and a plurality of the high-beam modules are arranged in a matrix, each column of modules or each row of modules constitutes one module unit, and the module unit includes a housing accommodating each module.

In one embodiment, one of the low-beam modules and one of the signal lamp modules are combined to form one module unit; and/or, one of the high-beam modules and one of the signal lamp modules are combined to form one module unit; and the module unit includes a housing accommodating modules, and a plurality of the module units are arranged in a preset manner.

In one embodiment, at least one of the low-beam module and the high-beam module includes: a lens, a reflector, a light source, and a circuit board, where the light source is arranged on the circuit board, the light source is positioned below the reflector, the lens is arranged in front of the reflector, and light of the light source enters from one end of the lens and exits from the other end of the lens after being reflected by the reflector.

In one embodiment, at least one of the low-beam module and the high-beam module further includes a radiator connected to the circuit board.

In one embodiment, the radiator is positioned on a surface of the circuit board away from the light source, and the radiator is bolted to the circuit board.

According to a second aspect, the present disclosure provides a vehicle lamp, including a control module and the vehicle lamp module group provided in any embodiment according to the first aspect of the present disclosure, where the control module is connected to the vehicle lamp module group, and the control module can control on/off of each module.

According to a third aspect, the present disclosure provides a vehicle, including a vehicle body, a user terminal and at least one vehicle lamp provided in the second aspect of the present disclosure; where the vehicle lamp is arranged on the vehicle body, and the user terminal is arranged on the vehicle body and connected to the vehicle lamp.

In one embodiment, the control module of the vehicle lamp is provided with a plurality of lighting modes, the user terminal is connected to the control module, the user terminal sends a control instruction to the control module to select the lighting mode, and the control module controls on/off of each module on the vehicle lamp according to the control instruction.

In one embodiment, at least one of the user terminal and the control module is integrated into a central control room of the vehicle body.

Compared with the conventional technology, the present disclosure has the beneficial effects that: the vehicle lamp module group includes a plurality of low-beam modules and a plurality of high-beam modules, the low-beam modules and the high-beam modules may be arranged according to a certain rule or arranged irregularly, such that projected light of at least two low-beam modules can jointly form a low-beam light shape, and projected light of at least two high-beam modules can jointly form a high-beam light shape; a user may select a corresponding number of low-beam modules and a corresponding number of high-beam modules to realize high-beam and low-beam illumination; in addition, according to personal preferences, the user may select to present different lighting forms of the low-beam modules, the high-beam modules and signal lamp modules, so as to make his/her vehicle lamp present different appearance styles.

### BRIEF DESCRIPTION OF DRAWINGS

In order to more clearly illustrate the technical solutions of the embodiments of the present disclosure, the drawings required in the embodiments of the present disclosure will be briefly described below. It should be understood that the following drawings only illustrate some embodiments of the present disclosure and therefore should not be considered as limitations of the scope, and for those of ordinary skill in the art, other related drawings can be obtained according to these drawings without creative efforts.
FIG. 1 is a structural schematic diagram of a vehicle according to an embodiment of the present disclosure;
FIG. 2 is a structural schematic diagram of a vehicle lamp according to an embodiment of the present disclosure;
FIG. 3 is a structural schematic diagram of a low-beam unit, a high-beam unit and a signal lamp module of a vehicle lamp module group according to a first embodiment of the present disclosure;
FIG. 4 is a schematic diagram of a non-lighting performance of a vehicle lamp module group according to a first embodiment of the present disclosure;
FIG. 5 is a structural schematic diagram I of inside of a housing according to an embodiment of the present disclosure;
FIG. 6 is a structural schematic diagram II of inside of a housing according to an embodiment of the present disclosure;
FIG. 7 is a structural schematic diagram III of inside of a housing according to an embodiment of the present disclosure;
FIG. 8 is a schematic diagram I of a lighting performance of a vehicle lamp module group according to the first embodiment of the present disclosure;
FIG. 9 is a schematic diagram II of a lighting performance of a vehicle lamp module group according to the first embodiment of the present disclosure;
FIG. 10 is a schematic diagram III of a lighting performance of a vehicle lamp module group according to the first embodiment of the present disclosure;
FIG. 11 is a structural schematic diagram of a module unit of a vehicle lamp module group according to a second embodiment of the present disclosure;
FIG. 12 is a schematic diagram of a non-lighting performance of a vehicle lamp module group according to the second embodiment of the present disclosure;
FIG. 13 is a schematic diagram I of a lighting performance of a vehicle lamp module group according to the second embodiment of the present disclosure;
FIG. 14 is a schematic diagram II of a lighting performance of a vehicle lamp module group according to the second embodiment of the present disclosure;
FIG. 15 is a schematic diagram III of a lighting performance of a vehicle lamp module group according to the second embodiment of the present disclosure;
FIG. 16 is a structural schematic diagram I of a module unit of a vehicle lamp module group according to a third embodiment of the present disclosure;
FIG. 17 is a structural schematic diagram II of a module unit of a vehicle lamp module group according to the third embodiment of the present disclosure;
FIG. 18 is a schematic diagram of a non-lighting performance of a vehicle lamp module group according to the third embodiment of the present disclosure;
FIG. 19 is a schematic diagram I of a lighting performance of a vehicle lamp module group according to the third embodiment of the present disclosure;
FIG. 20 is a schematic diagram II of a lighting performance of a vehicle lamp module group according to the third embodiment of the present disclosure;
FIG. 21 is a schematic diagram III of a lighting performance of a vehicle lamp module group according to the third embodiment of the present disclosure;
FIG. 22 is a light shape area diagram I of the emergent light of a low-beam module projected on a light distribution screen according to an embodiment of the present disclosure;
FIG. 23 is a light shape area diagram II of the emergent light of a low-beam module projected on a light distribution screen according to an embodiment of the present disclosure;
FIG. 24 is a light shape area diagram III of the emergent light of a low-beam module projected on a light distribution screen according to an embodiment of the present disclosure;
FIG. 25 shows a complete vehicle lamp low-beam illumination light shape formed by the emergent light of a plurality of low-beam modules projected on a light distribution screen according to an embodiment of the present disclosure; and
FIG. 26 shows a complete vehicle lamp low-beam illumination light shape formed by the emergent light projected on a light distribution screen based on FIG. 25, in which another two low-beam units are illuminated.

### Reference numerals:

1: vehicle; 11: vehicle body; 12: vehicle lamp; 121: control module; 13: user terminal; 100: vehicle lamp module group; 101: low-beam module; 102: high-beam module; 103: signal lamp module; 200: low-beam unit; 300: high-beam unit; 400: housing; 500: module unit; 600: lens; 700: reflector; 800: circuit board; 801: light source; and 900: radiator.

### DETAILED DESCRIPTION OF EMBODIMENTS

The terms "first", "second", "third", and the like are merely used to distinguish between descriptions and do not indicate a sequence number, nor can these terms be understood as indicating or implying relative importance.

Moreover, the terms "horizontal", "vertical", "suspended", and the like do not imply that the components are absolutely horizontal or suspended, but may be slightly inclined. For example, "horizontal" merely means that the direction is more horizontal than "vertical" and does not mean that the structure must be perfectly horizontal, but may be slightly inclined.

In the description of the present disclosure, it should be noted that an orientation or positional relationship indicated by terms "inner", "outer", "left", "right", "upper", "lower", or the like is an orientation or positional relationship based on the accompanying drawings, or an orientation or positional relationship that the product of the present disclosure is usually placed when in use. These terms are merely used to facilitate and simplify description of the present disclosure, instead of indicating or implying that a mentioned apparatus or element must have a specific orientation or be constructed and operated in a specific orientation, and therefore the terms cannot be construed as a limitation on the present disclosure.

In descriptions of the present disclosure, unless otherwise expressly specified and limited, terms "arrange", "mount", "interconnect", and "connect" should be understood in a broad sense. For example, such terms may indicate a fixed connection, a detachable connection, or an integral connection; may indicate a mechanical connection or an electrical connection; and may indicate direct interconnection, indirect interconnection through an intermediate medium, or internal communication between two elements.

The technical solutions of the present disclosure are clearly and completely described below with reference to the accompanying drawings.

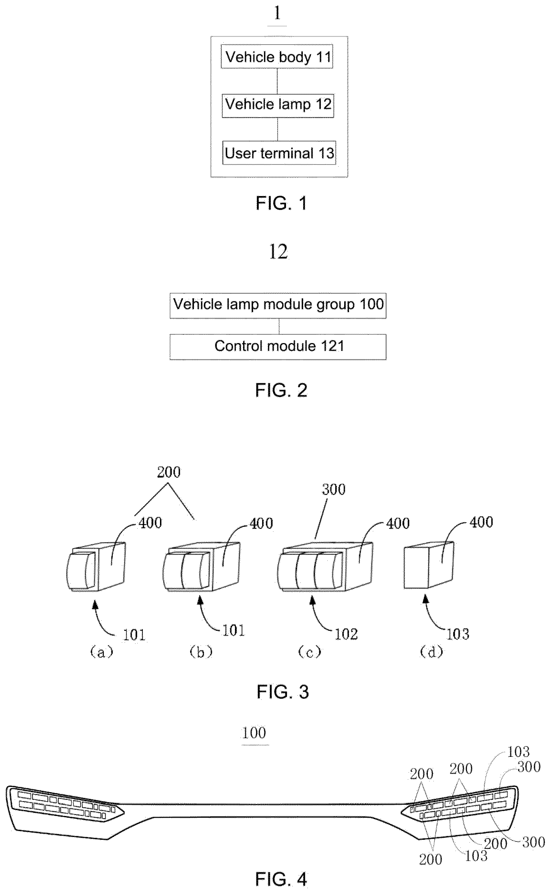

Referring to FIG. 1, FIG. 1 is a structural schematic diagram of a vehicle 1 according to an embodiment of the present disclosure. The vehicle 1 includes a vehicle body 11, at least one vehicle lamp 12, and a user terminal 13, where the vehicle lamp 12 is arranged on the vehicle body 11. The user terminal 13 is arranged in the vehicle body 11 and electrically connected to the vehicle lamp 12. The user terminal 13 may be integrated into a central control room of the vehicle body 11. The vehicle 1 may be a human-driven automobile or an autonomous driving vehicle of various levels.

The vehicle lamp 12 may include one or more of a headlight, a brake light, a turn signal light, a position light or a daytime running light. When the vehicle lamp 12 is a headlight, the vehicle lamp 12 may be mounted at two sides of the head of the vehicle body 11 for lighting during night driving and urban road driving; when the vehicle lamp 12 is a brake lamp, the vehicle lamp 12 may be mounted at the rear of the vehicle body 11 to indicate the steering, deceleration or stopping of the driving vehicle 1, providing a clear driving indication to the vehicles behind; and when the vehicle lamp 12 is a turn signal light, the vehicle lamp 12 may be mounted at the front, rear, and side of the vehicle body 11 to indicate the steering of the vehicle 1. When the vehicle lamp 12 is a position lamp, the vehicle lamp 12 may be mounted at the front and rear of the vehicle 1 for displaying a position of the vehicle 1 after the vehicle is started. For example, when the vehicle breaks down and is parked at the roadside, the position lamp of the vehicle needs to be turned on to inform the coming and going vehicle to pay attention; and it is also for indicating the presence of the driving vehicle and the width of the vehicle body when special vehicles such as police vehicles perform tasks at special time; and when the vehicle lamp 12 is a daytime running light, the vehicle lamp 12 may be mounted at two sides of a front end of the vehicle 1, for prompting the presence of the vehicle 1 to the front in the daytime.

Referring to FIG. 2, FIG. 2 is a structural schematic diagram of a vehicle lamp 12 according to an embodiment of the present disclosure. The vehicle lamp 12 includes a control module 121 and a vehicle lamp module group 100, where the control module 121 is connected to the vehicle lamp module group 100, and the control module 121 can control on/off of each module. The control module 121 is provided with several lighting modes presented by different lighting forms of light-emitting units in the vehicle lamp module group 100, a user can send an instruction to the control module 121 through the user terminal 13 to select a corresponding lighting mode, and the control module 121 controls on/off of the corresponding modules in the vehicle lamp module group 100 on the vehicle lamp 12 according to the instruction.

In an embodiment, both the user terminal 13 and the control module 121 may be integrated into a central control room of the vehicle body 11, and the user can select a preferred lighting mode on the central control display screen, so that the vehicle lamp 12 can present different vehicle lamp lighting configurations while meeting the requirement of road illumination, and different lighting effects are displayed on the central control display screen for the user to select.

In an embodiment, the user terminal 13 is provided with an APP capable of sending an instruction to the control module 121, and the APP is configured with a plurality of lighting modes for a user to select, including some free lighting modes and some paid lighting modes. The vehicle lamp lighting mode of the paid lighting mode is more special and complex, and the lighting effect shown is more beautiful, so that the user can select his/her favorite lighting mode through the APP according to his/her own preferences, making the vehicle lamp 12 present different lighting configurations of the vehicle lamp.

Referring to FIG. 3, FIG. 3 is a structural schematic diagram of a low-beam unit 200, a high-beam unit 300 and a signal lamp module 103 of a vehicle lamp module group 100 according to a first embodiment of the present disclosure. The vehicle lamp module group 100 includes a low-beam unit 200 and a high-beam unit 300, the low-beam unit 200 includes at least one low-beam module 101 and a housing 400 accommodating the low-beam module 101, the high-beam unit 300 includes at least one high-beam module 102 and a housing 400 accommodating the high-beam module 102. Referring to FIG. 4, the low-beam unit 200 and the high-beam unit 300 are arranged in a preset manner.

Still referring to FIGs. 3 and 4, the vehicle lamp module group 100 includes a plurality of low-beam modules 101 and a plurality of high-beam modules 102, where the low-beam modules 101 and the high-beam modules 102 are arranged in a preset manner, and projected light of at least two low-beam modules 101 can form a low-beam light shape, and projected light of at least two high-beam modules 102 can form a high-beam light shape. The vehicle lamp module group 100 further includes a plurality of signal lamp modules 103 (referring to FIG. 3(d)), where the signal lamp module 103 may be a common signal lamp module 103 having a light source and a transparent light guide, and the signal lamp modules 103, the low-beam modules 101 and the high-beam modules 102 are arranged in a preset manner. In this embodiment, the preset arrangement of the low-beam modules 101, the high-beam modules 102, and the signal lamp modules 103 may be an irregular arrangement.

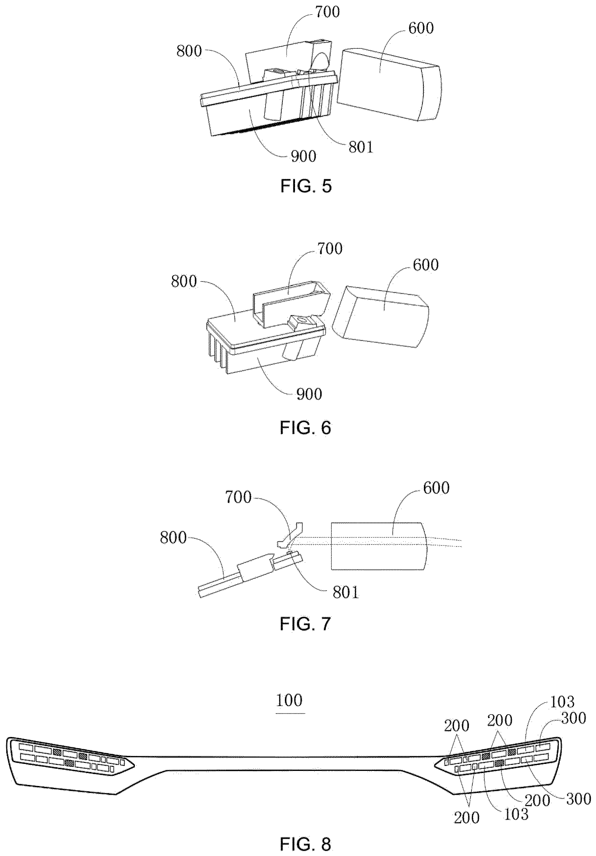

Referring to FIGs. 5 to 7, at least one of the low-beam module 101 and the high-beam module 102 includes: a lens 600, a reflector 700, a circuit board 800, and a light source 801; herein, the light source 801 is arranged on the circuit board 800, the light source 801 may be an LED emitting light, the light source is positioned below the reflector 700, the lens 600 is arranged in front of the reflector 700, and the light of the light source 801 enter from one end of the lens 600 and exit from the other end of the lens 600 after being reflected by the reflector 700 (referring to a light-ray propagation direction in FIG. 7). At least one of the low-beam module 101 and the high-beam module 102 further includes a radiator 900 connected to the circuit board 800. On a surface of the circuit board 800 away from the light source 801, the radiator 900 may be mounted on the circuit board 800 by bolting.

FIGs. 5 to 7 are structural schematic diagrams of inside of a housing 400 of a low-beam unit 200 or a high beam-unit 300 in a vehicle lamp module group 100 in FIG. 3, i.e., the low-beam unit 200 having a low-beam module 101 shown in FIG. 3(a) or the high-beam unit 300 having at least one high-beam module 102 shown in FIG. 3(c); FIG. 3(b) shows a low-beam unit 200 formed by interconnecting two low-beam modules 101 shown in FIGs. 5 to 7, and FIG. 3(c) shows a high-beam unit 300 formed by interconnecting three high-beam modules 102 shown in FIGs. 5 to 7. The low-beam unit 200 in FIG. 3(a) and FIG. 3(b), the high-beam unit 300 in FIG. 3(c), and the signal lamp module 103 in FIG. 3(d) are arranged in an irregular manner shown in FIG. 4. In this embodiment, after being reflected by the reflector 700, the light emitted from the LED light source 801 enters from one end of the lens 600 and exits from the other end of the lens 600, a low-beam light shape is jointly formed by the projected light of the low-beam modules 101, and it requires projection of the light emitted from at least two low-beam modules 101 to form the low-beam light shape; after being reflected by the reflector 700, the light emitted from the LED light source 801 enters from one end of the lens 600 and exits from the other end of the lens 600, a high-beam light shape is jointly formed by the projected light of the high-beam modules 102, and it requires projection of the light emitted from at least two high-beam modules 102 to form the high-beam light shape.

Referring to FIGs. 4 and 8, there are a plurality of the low-beam units 200 and a plurality of the high-beam units 300, and the plurality of the low-beam units 200 and the plurality of the high-beam units 300 are arranged in a matrix, and may also be arranged in a matrix together with the signal lamp modules 103. Each column of units constitute one column of vehicle lamp units or each row of units constitute one row of the vehicle lamp units, and in one column or one row of the vehicle lamp units, the low-beam unit 200, the high-beam unit 300, and the signal lamp modules 103 may be arranged in an irregular manner. Taking FIGs. 4 and 8 as an example, FIG. 4 is a schematic diagram of a non-lighting performance of the vehicle lamp module group 100, where the low-beam unit 200, the high-beam unit 300, and the signal lamp module 103 are arranged in two rows in an irregular manner. Two low-beam units 200 shown in FIG. 3(a), two low-beam units 200 shown in FIG. 3(b), one high-beam unit 300 shown in FIG. 3(c) and four signal lamp modules 103 shown in FIG. 3(d) are contained in a first row, where the signal lamp modules 103 are arranged in an inserted manner. Two low-beam units 200 shown in FIG. 3(a), one low-beam unit 200 shown in FIG. 3(b), one high-beam unit 300 shown in FIG. 3(c) and four signal lamp modules 103 shown in FIG. 3(d) are contained in a second row, where the signal lamp modules 103 are arranged in an inserted manner.

Referring to FIG. 8, in an operation process, a user can select a lighting control instruction corresponding to a desired lighting mode according to a lighting mode option provided in an APP in the user terminal 13, and send a lighting control instruction of "lighting the low-beam unit 200 having two low-beam modules 101" to the control module 121 through the user terminal 13; and the control module 121 controls the light sources 801 in the low-beam unit 200 (FIG. 3(b)) having two interconnected low-beam modules 101 in the first row and the low-beam unit 200 (FIG. 3(b)) having two interconnected low-beam modules 101 in the second row of the vehicle lamp module group 100 to turn on according to the instruction, so as to realize the lighting mode of three low-beam units 200 shown by shaded parts in FIG. 8, so that the vehicle lamp 12 can be used for low-beam illumination.

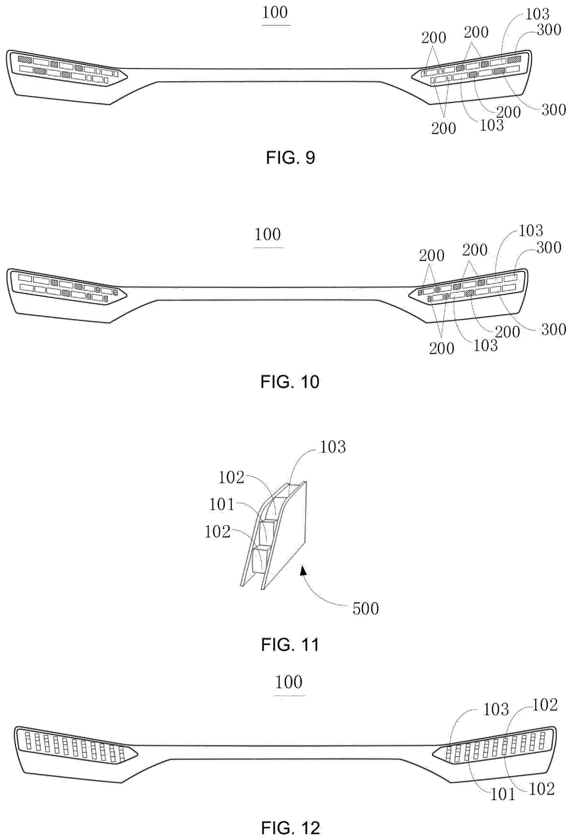

Referring to FIG. 9, FIG. 9 is a schematic diagram II of a lighting performance of a vehicle lamp module group 100 according to a first embodiment of the present disclosure. In an operation process, a user can select a lighting control instruction corresponding to a desired lighting mode according to a lighting mode option provided in an APP in the user terminal 13, and send a lighting control instruction of "lighting the low-beam unit 200 having two low-beam modules 101, and lighting the high-beam unit 300 having three interconnected high-beam modules 102" to the control module 121 through the user terminal 13; and the control module 121 controls the light sources 801 in the low-beam unit 200 (FIG. 3(b)) having two interconnected low-beam modules 101 and the high-beam unit 300 (FIG. 3(c)) having three interconnected high-beam modules 102 in the first row, and controls that in the low-beam unit 200 (FIG. 3(b)) having two interconnected low-beam modules 101 and the high-beam unit 300 (FIG. 3(c)) having three interconnected high beam modules 102 in the second row to turn on according to the instruction, so as to realize the lighting modes of three low-beam units 200 and two high-beam units 300 shown by shaded parts in FIG. 9, so that the vehicle lamp 12 can be used for high-beam illumination.

Referring to FIG. 10, FIG. 10 is a schematic diagram III of a lighting performance of a vehicle lamp module group 100 according to a first embodiment of the present disclosure. The lighting mode in FIG. 10 is a lighting mode in which four low-beam units 200 (FIG. 3(a)) having one low-beam module 101 are added based on the lighting shown in FIG. 8. Specifically, in an operation process, a user can select a lighting control instruction corresponding to a desired lighting mode according to a lighting mode option provided in an APP in the user terminal 13, and send a lighting control instruction of "lighting the low-beam unit 200 having one low-beam module 101, and lighting the low-beam unit 200 having two low-beam modules 101" to the control module 121 through the user terminal 13; and the control module 121 controls the light sources 801 in the low-beam unit 200 (FIG. 3(a)) having one low-beam module 101 and in the low-beam unit 200 (FIG. 3(b)) having two interconnected low-beam modules 101 in the first row, and controls that in the low-beam unit 200 (FIG. 3(a)) having one low-beam module 101 and the low-beam unit 200 (FIG. 3(b)) having two interconnected low-beam modules 101 in the second row to turn on according to the instruction, so that the vehicle lamp 12 can be used for road illumination with high light intensity low-beam illumination, such as illumination on an expressway.

In a first embodiment, the signal lamp modules 103 in FIGs. 8, 9 and 10 can always keep on or off state based as required.

Referring to FIG. 11, FIG. 11 is a structural schematic diagram of a module unit 500 of a vehicle lamp module group 100 according to a second embodiment of the present disclosure. The plurality of the low-beam modules 101 and the plurality of the high-beam modules 102 are arranged in a matrix, and may also be arranged in a matrix together with the signal lamp modules 103. For example, one low-beam module 101 is arranged in two adjacent high-beam modules 102 shown in FIG. 11, and the signal lamp module 103 is connected to one of the high-beam modules 102. Each column of modules or each row of modules constitute one module unit 500, and the module unit 500 includes a housing 400 accommodating the modules. A structural schematic diagram of inside of the housing 400 is the same as that shown in FIGs. 5 to 7, including a lens 600, a reflector 700, a circuit board 800, a light source 801 and a radiator 900. Details are not described herein again.

Referring to FIG. 12, FIG. 12 is a schematic diagram of a non-lighting performance of a vehicle lamp module group 100 according to a second embodiment of the present disclosure. The module units 500 shown in FIG. 11 are regularly arranged transversely according to the arrangement shown in FIG. 12 to form 11 columns of module units 500, so that the appearance of the vehicle lamp 12 is in a multi-column slash form.

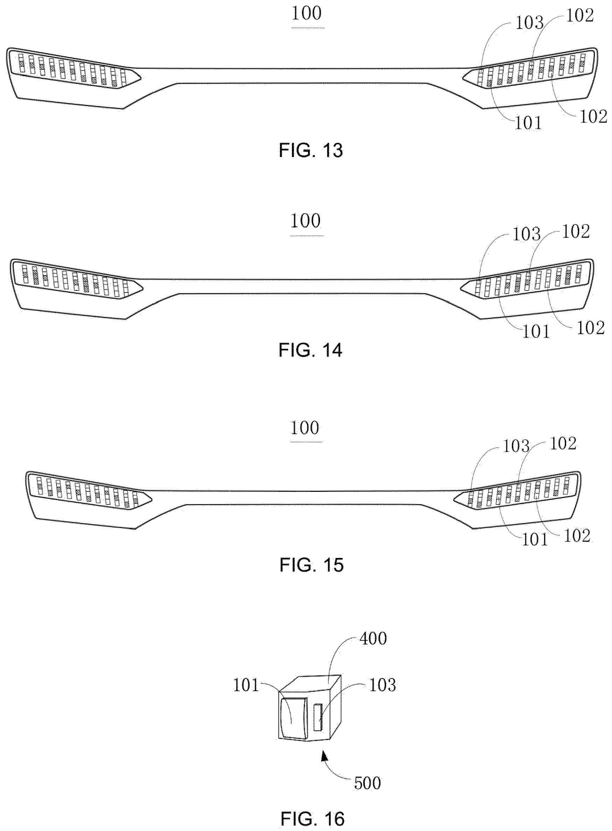

Referring to FIG. 13, FIG. 13 is a schematic diagram I of a lighting performance of a vehicle lamp module group 100 according to a second embodiment of the present disclosure. In an operation process, a user can select a lighting control instruction corresponding to a desired lighting mode according to a lighting mode option provided in an APP in the user terminal 13, and send a lighting control instruction of "lighting the bottommost high-beam modules 102 in the second, third, fourth and fifth columns, and lighting the low-beam modules 101 in the sixth, seventh, eighth, ninth, tenth and eleventh columns" to the control module 121 through the user terminal 13; and the control module 121 controls the light sources 801 of the bottommost high-beam modules 102 in the second, third, fourth and fifth columns and the low-beam modules in the sixth, seventh, eighth, ninth, tenth and eleventh columns of the vehicle lamp module group 100 to turn on according to the instruction, so as to realize the lighting mode of the six low-beam modules 101 and the four high-beam modules 102 shown by shaded parts in FIG. 13, so that the vehicle lamp 12 can be used for high-beam illumination.

Referring to FIG. 14, FIG. 14 is a schematic diagram II of a lighting performance of a vehicle lamp module group 100 according to a second embodiment of the present disclosure. In an operation process, a user can select a lighting control instruction corresponding to a desired lighting mode according to a lighting mode option provided in an APP in the user terminal 13, and send a lighting control instruction of "lighting the low-beam modules 101 in the fourth, sixth, ninth and eleventh columns, and lighting the low-beam modules 101 and the high-beam modules 102 in the fifth and tenth columns" to the control module 121 through the user terminal 13; and the control module 121 controls the light sources 801 in the low-beam modules 101 in the fourth, sixth, ninth and eleventh columns, and the low-beam modules 101 and the high-beam modules 102 in the fifth and tenth columns of the vehicle lamp module group 100 to turn on according to the instruction, so as to realize the lighting mode of the six low-beam modules 101 and the four high-beam modules 102 shown by shaded parts in FIG. 14, so that the lighting configuration shown in FIG. 14 is different from that shown in FIG. 13, the vehicle lamp 12 can be used for high-beam illumination, and the customized demands of the user for personalized lighting can be satisfied.

Referring to FIG. 15, FIG. 15 is a schematic diagram III of a lighting performance of a vehicle lamp module group 100 according to a second embodiment of the present disclosure. In one operation process, a user can select a lighting control instruction corresponding to a desired lighting mode according to a lighting mode option provided in an APP in the user terminal 13, and send a lighting control instruction of "lighting the low-beam modules 101 in the first, third, fifth, seventh, ninth, and eleventh columns, lighting the bottommost high-beam modules 102 in the second, sixth, and tenth columns, and lighting the topmost high-beam modules 102 of the fourth and eighth columns" to the control module 121 through the user terminal 13; and the control module 121 controls the light sources 801 of the low-beam modules 101 in the first, third, fifth, seventh, ninth, and eleventh columns, the bottommost high-beam modules 102 in the second, sixth, and tenth columns, and the topmost low-beam modules 101 in the fourth and eighth columns of the vehicle lamp module group 100 to turn on according to the instruction, so as to realize the lighting mode of the six low-beam modules 101 and the five high-beam modules 102 shown by shaded parts in FIG. 15, making the lighting configuration shown in FIG. 12 wavy, beautiful and novel, so that the vehicle lamp 12 can be used for high-beam illumination.

In a second embodiment, the signal lamp modules 103 in FIGs. 13, 14 and 15 can always keep on/off state based as required.

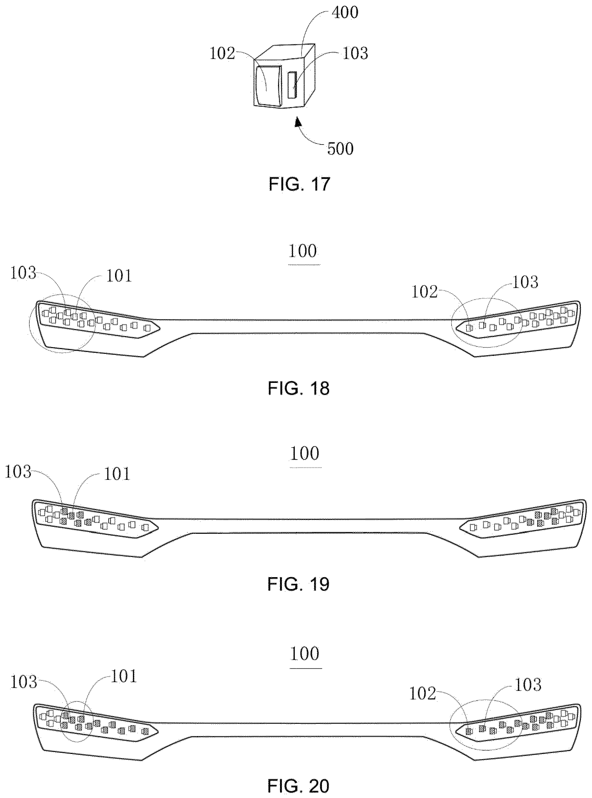

Referring to FIG. 16, FIG. 16 is a structural schematic diagram of a module unit 500 of a vehicle lamp module group 100 according to a third embodiment of the present disclosure. One of the low-beam modules 101 and one of the signal lamp modules 103 are combined to form one module unit 500, and the module unit 500 includes a housing 400 accommodating the modules. As shown in FIG. 18, a plurality of module units are arranged in a preset manner. The structural schematic diagram of the low-beam module 101 inside the housing 400 is the same as that shown in FIGs. 5 to 7, including a lens 600, a reflector 700, a circuit board 800, a light source 801 and a radiator 900. Details are not described herein again.

Referring to FIG. 17, FIG. 17 is a structural schematic diagram II of a module unit 500 of a vehicle lamp module group 100 according to a third embodiment of the present disclosure. Alternatively, one of the high-beam modules 102 and one of the signal lamp modules 103 are combined to form one module unit 500, and the module unit 500 includes a housing 400 accommodating the modules. As shown in FIG. 18, a plurality of the module units 500 are arranged in a preset manner. As described above, the structural schematic diagram of the high-beam module 102 inside the housing 400 is the same as that shown in FIGs. 5 to 7, including a lens 600, a reflector 700, a circuit board 800, a light source 801 and a radiator 900. Details are not described herein again.

Referring to FIG. 18, FIG. 18 is a schematic diagram of a non-lighting performance of a vehicle lamp module group 100 according to a third embodiment of the present disclosure. The module units 500 shown in FIG. 16 or FIG. 17 are arranged in an irregular mode in FIG. 18. In an embodiment, the number of the module units 500 having the high-beam module 102 is six, and the number of the module units 500 having the low-beam module 101 is ten.

Referring to FIG. 19, FIG. 19 is a schematic diagram I of a lighting performance of a vehicle lamp module group 100 according to a third embodiment of the present disclosure. In an operation process, a user can select a lighting control instruction corresponding to a desired lighting mode according to a lighting mode option provided in an APP in the user terminal 13, and send a lighting control instruction of "lighting six low-beam modules 101" to the control module 121 through the user terminal 13; and the control module 121 controls the light sources 801 in any six low-beam modules 101 in the vehicle lamp module group 100 to turn on according to the instruction, so as to realize the lighting mode of six low-beam modules 101 shown by the shaded parts in FIG. 19, so that the vehicle lamp 12 can be used for low-beam illumination.

Referring to FIG. 20, FIG. 20 is a schematic diagram II of a lighting performance of a vehicle lamp module group 100 according to a third embodiment of the present disclosure. In an operation process, a user can select a lighting control instruction corresponding to a desired lighting mode according to a lighting mode option provided in an APP in the user terminal 13, and send a lighting control instruction of "lighting six high-beam modules 102 and lighting six low-beam modules 101" to the control module 121 through the user terminal 13; and the control module 121 controls the light sources 801 of the high-beam modules 102 and any six low-beam modules 101 in the vehicle lamp module group 100 to turn on according to the instruction, so as to realize lighting mode of six low-beam modules 101 and six high-beam modules 102 shown by shaded parts in FIG. 20, so that the vehicle lamp 12 to be used for high-beam illumination.

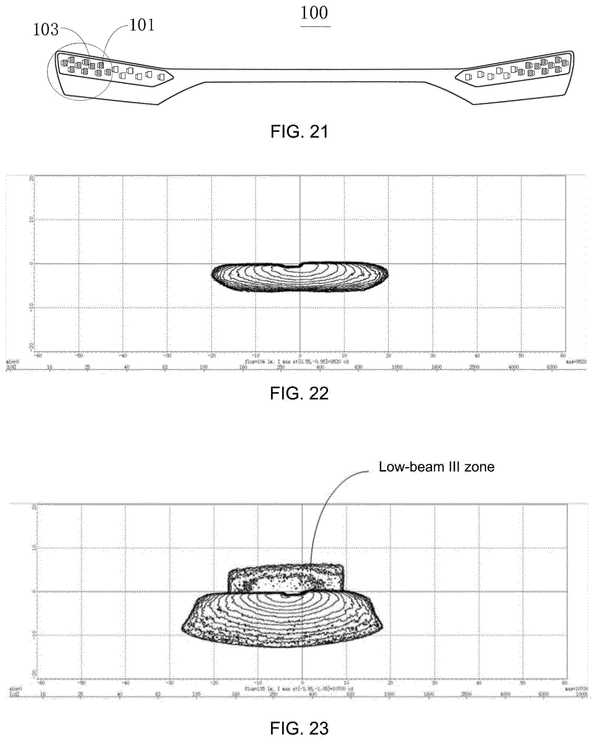

Referring to FIG. 21, FIG. 21 is a schematic diagram III of a lighting performance of a vehicle lamp module group 100 according to a third embodiment of the present disclosure. In an operation process, a user can select a lighting control instruction corresponding to a desired lighting mode according to a lighting mode option provided in an APP in the user terminal 13, and send a lighting control instruction of "lighting ten low-beam modules 101" to the control module 121 through the user terminal 13; and the control module 121 controls the light sources 801 of all the low-beam modules 101 in the vehicle lamp module group 100 to turn on according to the instruction, so as to realize the lighting mode of ten low-beam modules 101 shown by shaded parts in FIG. 21, so that the vehicle lamp 12 can be used for low-beam illumination, an enhancement mode of the low-beam illumination can be realized, and the illumination intensity thereof is higher than that in FIG. 19, thereby meeting the different requirements of the customers.

In a third embodiment, the signal lamp modules 103 in FIGs. 19, 20 and 21 can always keep on/off state as required.

Referring to FIG. 22, FIG. 22 is a light shape area diagram I of the emergent light of a low-beam module projected on a light distribution screen 101 according to an embodiment of the present disclosure. The light shape area has a low-beam cut-off line, which is formed by providing a cut-off line structure at a lower edge of the reflector 700.

Referring to FIG. 23, FIG. 23 is a light shape area diagram II of the emergent light of a low-beam module projected on a light distribution screen 101 according to an embodiment of the present disclosure. The light shape area has a low-beam III zone.

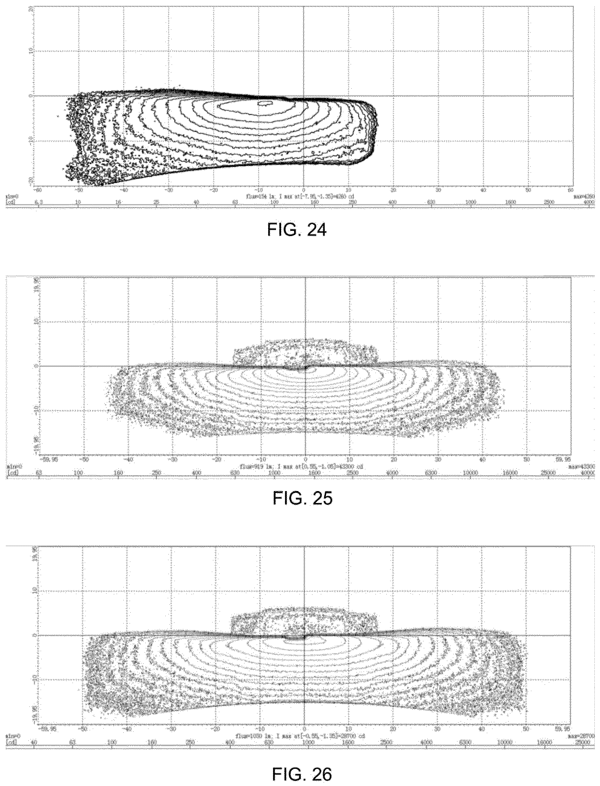

Referring to FIG. 24, FIG. 24 is a light shape area diagram III of the emergent light of a low-beam module projected on a light distribution screen 101 according to an embodiment of the present disclosure. The light shape area has a larger left-side widening angle.

Referring to FIG. 25, FIG. 25 shows a complete vehicle lamp low-beam illumination light shape formed by the emergent light of a plurality of low-beam modules 101 projected on a light distribution screen according to an embodiment of the present disclosure. Meanwhile, referring to FIG. 26, FIG. 26 shows that another 2 low-beam units 200 are illuminated based on FIG. 25, so that the widening angle on two sides of the low-beam light shape is increased, thereby increasing the range of low-beam illumination.

According to the present disclosure, the projected light of at least two low-beam modules 101 can jointly form a low-beam light shape, and the projected light of at least two high-beam modules 102 can jointly form a high-beam light shape. Therefore, a user may select a corresponding number of low-beam modules 101 and a corresponding number of high-beam modules 102 to realize high-beam and low-beam illumination; in addition, according to personal preferences, the user may select to present different lighting configurations of the low-beam modules 101, the high-beam modules 102 and signal lamp modules 103, such that the his/her own vehicle lamp 12 presents different appearance styles.

It should be noted that the features in the embodiments of the present disclosure can be combined with each other without conflict.

The above described contents are only preferred embodiments of the present disclosure and are not intended to limit the present disclosure. For those skilled in the art, the present disclosure can be modified and varied. Any modification, equivalent replacement, improvement, or the like made without departing from the spirit and principle of the present disclosure shall fall within the protection scope of the present disclosure.

## Claims

1. A vehicle lamp module group, **characterized by** comprising:
a plurality of low-beam modules; and
a plurality of high-beam modules, wherein the low-beam modules and the high-beam modules are arranged in a preset manner,
wherein projected light of at least two low-beam modules is capable of jointly forming a low-beam light shape, and projected light of at least two high-beam modules is capable of j ointly forming a high-beam light shape.

2. The vehicle lamp module group according to claim 1, **characterized by** further comprising:
a plurality of signal lamp modules, wherein the signal lamp modules, the low-beam modules and the high-beam modules are arranged in a preset manner.

3. The vehicle lamp module group according to claim 1 or 2, wherein the vehicle lamp module group comprises a low-beam unit and a high-beam unit, the low-beam unit comprises at least one low-beam module and a housing accommodating the low-beam module, the high-beam unit comprises at least one high-beam module and a housing accommodating the high-beam module, and the low-beam unit and the high-beam unit are arranged in a preset manner.

4. The vehicle lamp module group according to claim 3, wherein there are a plurality of the low-beam units, the low-beam units comprise a low-beam unit having one low-beam module and a low-beam light unit having two interconnected low-beam modules, and the high-beam unit comprises three interconnected high-beam modules.

5. The vehicle lamp module group according to claim 3, wherein there are a plurality of the low-beam units and a plurality of the high-beam units, and the plurality of the low-beam units and the plurality of the high-beam units are arranged in a matrix, wherein each column of units constitute a column of vehicle lamp units, or each row of units constitute a row of vehicle lamp units.

6. The vehicle lamp module group according to claim 5, wherein there are two rows of the vehicle lamp units, a first row of the vehicle lamp units comprise two low-beam units having one low-beam module, two low-beam units having two interconnected low-beam modules and one high-beam unit having three interconnected high-beam modules, and a second row of the vehicle lamp units comprise two low-beam units having one low-beam module, one low-beam unit having two interconnected low-beam modules and one high-beam unit having three interconnected high-beam modules.

7. The vehicle lamp module group according to claim 1 or 2, wherein the plurality of the low-beam modules and the plurality of the high-beam modules are arranged in a matrix, each column of modules or each row of modules constitutes one module unit, and the module unit comprises a housing accommodating each module.

8. The vehicle lamp module group according to claim 2, wherein one of the low-beam modules and one of the signal lamp modules are combined to form one module unit;
and/or, one of the high-beam modules and one of the signal lamp modules are combined to form one module unit; and
the module unit comprises a housing accommodating modules, and a plurality of the module units are arranged in a preset manner.

9. The vehicle lamp module group according to claim 1, wherein at least one of the low-beam module and the high-beam module comprises: a lens, a reflector, a light source, and a circuit board,
wherein the light source is arranged on the circuit board, the light source is positioned below the reflector, the lens is arranged in front of the reflector, and light of the light source enters from one end of the lens and exits from the other end of the lens after being reflected by the reflector.

10. The vehicle lamp module group according to claim 9, wherein at least one of the low-beam module and the high-beam module further comprises a radiator connected to the circuit board.

11. The vehicle lamp module group according to claim 10, wherein the radiator is positioned on a surface of the circuit board away from the light source, and the radiator is bolted to the circuit board.

12. A vehicle lamp, **characterized by** comprising a control module and the vehicle lamp module group according to any one of claims 1 to 11, wherein the control module is connected to the vehicle lamp module group, and the control module can control on/off of each module.

13. A vehicle, **characterized by** comprising a vehicle body, a user terminal and at least one vehicle lamp according to claim 12,
wherein the vehicle lamp is arranged on the vehicle body, and
the user terminal is arranged on the vehicle body and connected to the vehicle lamp.

14. The vehicle according to claim 13, wherein the control module of the vehicle lamp is provided with a plurality of lighting modes, the user terminal is connected to the control module, the user terminal sends a control instruction to the control module to select the lighting mode, and the control module controls on/off of each module on the vehicle lamp according to the control instruction.

15. The vehicle according to claim 14, wherein at least one of the user terminal and the control module is integrated into a central control room of the vehicle body.
